Europäisches Patentamt

European Patent Office

Office européen des brevets

(11) Publication number: **0 090 110**
**B1**

(12) **EUROPEAN PATENT SPECIFICATION**

(45) Date of publication of patent specification: **25.05.88**

(51) Int. Cl.⁴: **B 60 C 27/06**

(21) Application number: **82301703.3**

(22) Date of filing: **31.03.82**

(54) **Easy-on tire chains.**

(43) Date of publication of application:
**05.10.83 Bulletin 83/40**

(45) Publication of the grant of the patent:
**25.05.88 Bulletin 88/21**

(84) Designated Contracting States:
**AT CH DE FR LI SE**

(56) References cited:
**US-A-1 339 963**
**US-A-3 362 450**
**US-A-3 481 384**
**US-A-3 945 162**

(73) Proprietor: **Guenther, Carl D.**
**7900 Airlane Avenue**
**Los Angeles California 90045 (US)**

(72) Inventor: **Guenther, Carl D.**
**7900 Airlane Avenue**
**Los Angeles California 90045 (US)**

(74) Representative: **Smith, Philip Antony et al**
**REDDIE & GROSE 16 Theobalds Road**
**London WC1X 8PL (GB)**

Courier Press, Leamington Spa, England.

## Description

The present invention relates to tire chains for use on motor vehicles in ice or snow conditions.

Many different systems for the installation of chains on motor vehicles have been suggested. The concept of using chains to improve traction in snow and ice is almost as old as the general use of motor vehicles and many different designs have been suggested.

In particular the Patent Specification US—A—3481384 discloses a tire chain assembly for motor vehicles comprising an apertured mounting member to be mounted to encircle the hub inboard of the vehicle wheel, pairs of tread chain segments to extend across the tread of the tire, the segments of each pair being attached at one end at spaced points to a coupling member for hooked engagement with the mounting member, and means for tightening the segments on the tire.

However in that assembly the other ends of each pair of chain segments are attached individually to the wheel stud bolts and have separate tightening buckles. The present invention provides an improved tire chain assembly which is simple, safe and rapidly installed and removed. This is achieved in that the segments of each pair are attached at their other ends to a first end of an intermediate chain which extends diametrically across the face of the wheel and is attached at its second end to the diametrically opposite pair of chain segments, and in that the intermediate chain is provided with a chain tensioning device.

With the assembly in accordance with the invention which will be described in more detail below the chains may be installed individually without crawling underneath the vehicle, moving the vehicle or jacking the vehicle up. The chains are mounted to the rear (inboard) of the wheel and tire by hooking them to a plate or disc member which is designed to be held in position between the wheel rim and, for instance, a brake drum by the lugs which position the wheel. This member may be seasonally or permanently bolted in place, as it does not interfere with the operation of the motor vehicle.

In addition, the chains are provided as a plurality of independent sections. As a result, if one section breaks, then the remaining sections are still retained on the tire and continue to provide traction. This is a significant advantage over many prior tire chain systems, since the breaking of a link or two in an ordinary continuous tire chain can result in severe damage to the motor vehicle body if the chain is not thrown completely clear. In addition, of course, the breaking of two links in an ordinary ladder-style tire chain results in a complete loss of utility and a termination of the chain's assistance. The present tire chains hook to the hub provided behind or inboard of the tire rim, traverse the tire tread in a pattern to provide plural traction surfaces, cross the front or outside of the tire rim, provide a second set of traction surfaces in a position opposed to the first set and are then attached to the opposite side of the hub. A plurality of these chain sections are provided for each wheel and each chain section has an independent tensioner to compensate for variations in overall tire diameter due to inflation, tire size and tire design.

A fastener is provided to secure the separate chain sections together after they are mounted on the wheel. This fastener, which may comprise a bolt, washer and nut combination or a releasable pin and washer combination, is installed through a central fastening link in each of the chain sections on the outside of the wheel where the chain sections intersect or cross each other. Securing the chain sections together at the central intersection point in this fashion serves to transfer unbalanced forces from one chain section to another and assists in maintaining the respective traction portions in the positions where they are mounted initially over the tire tread. The result is an integral chain set formed of the individual chain sections, once the sections are fastened together at the central point of intersection.

Plural gripping tracks are provided in each section of the chain that traverses the tire tread. The gripping sections may take the form of two parallel lines, a V shape, or even an X shape. In order to provide this, a pair of T-shaped connections are used to attach the ends of the gripping sections directly to opposed edges of the disc member. On the outside, the gripping sections are joined by an adjustable length of chain. The adjustment may take the form of, for example, a rotatable arm having over-center locking means, a threaded shaft or other tightening means. Each tire is provided with a plurality, e.g. two or more, of the chain sections. Each of the chain sections is independently mountable on the disc member and thus if one chain section breaks, the remaining chain sections are retained on the tire and the improved traction provided by the chains is still available to the user. In addition, this design characteristic allows the advantage of replacement of individual units should they become lost or broken, without replacement of the whole chain structure.

In the drawings:

Fig. 1 shows an ordinary tire and rim having two of the chain sections of the present invention mounted thereon;

Fig. 2 shows an exemplary chain tensioner mechanism which may be utilized to tighten the chain sections;

Fig. 3 shows one of the connectors used on the ends of a chain section;

Fig. 4 is a side view of a disc member used in the present invention;

Fig. 5 is a sectional view of the disc member taken along lines 5—5 of Fig. 4;

Fig. 6 shows another embodiment of the tread section and tensioner mechanism of the present invention;

Fig. 7 shows a portion of the arrangement of Fig. 1 with a central fastener installed to hold the chain sections in position;

Fig. 8 is a partial sectional view showing one type of chain fastener for use as shown in Fig. 7;

Fig. 9 shows another type of chain fastener as used in Fig. 7; and

Fig. 10 shows still another type of chain fastener for use in Fig. 7.

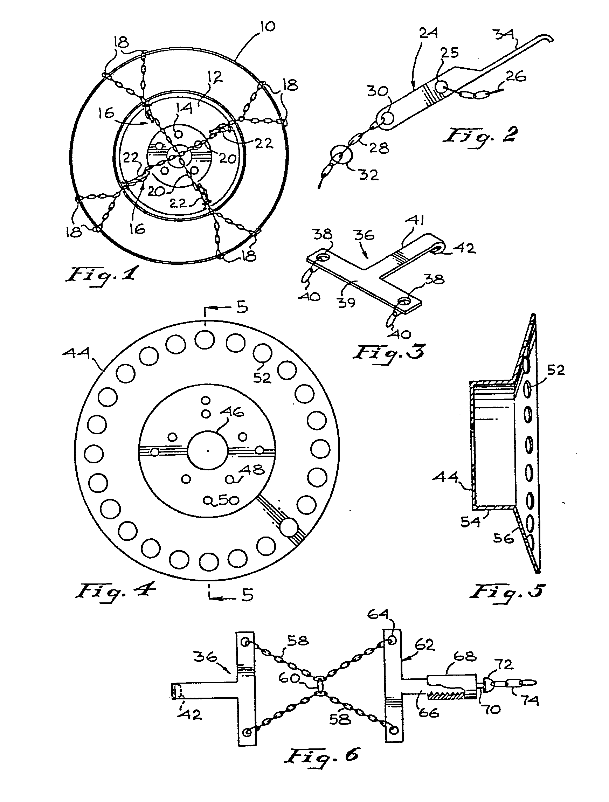

In Fig. 1, a conventional tire 10 is shown mounted on a conventional disc rim 12 having holes 14 for mounting to a motor vehicle through standard lugs and lug nuts, not shown. Tire 10, as shown, is provided with two chain sections 16 which are mounted to a disc member 44, shown in Fig. 4. However, three or more chain sections may be utilized, depending upon such factors as the overall tire diameter. Each chain section 16 is provided with a pair of V-shaped traction sections 18 which traverse the tire tread. The V-shaped sections are joined to intermediate section 20 which contains tensioning lever 22. The chains are mounted by attaching a T-shaped hook at each end of the chain section, described with respect to Fig. 3 below, to holes in the disc member 44, shown in Figs. 4 and 5, and then tensioning the chain across the tread through the use of tensioners 22. In this manner should one of the tensioners spring loose, or a chain link break, only one of the chain sections will be taken out of service. The remaining chain sections will continue to operate and thus provide traction for the vehicle.

In Fig. 2, one of the tensioners is shown. In this figure, tensioner 24 is provided with an aperture 25 for connecting a first portion of intermediate chain section 26 and a second aperture 30 for attaching a second portion of intermediate chain section 28. The tensioner is shown in the open position in this form. In operation, the tensioner would be rotated about chain attaching aperture 30 and, when pivoted 180° from the position shown, holding ring 32 would be slid over handle 34 and the tension on the chain, which tends to reverse the rotation, will hold the handle and ring in position.

In Fig. 3, the T-shaped connector attaching the chain units to the disc member is depicted. Connector 36 is provided with apertures 38 on cross member 39 which are used to attach chain 40 to the hook. Each section of chain 40 is a continuation of one of chains 18 shown in Fig. 1 and thus chains 18 cross the tread of the tire, pass behind or inside of the wheel and are attached to the hub of Fig. 4. The leg 41 of T-shaped hook 36 is provided with a curved attaching hook 42 which is positioned through an aperture in the retaining disc member. In this manner, T-shaped hook 36 may be easily positioned on the disc by merely reaching around the tire and sliding curved hooking surface 42 into one of the orifices in the disc.

In Fig. 4, an exemplary disc member 44 is depicted. The disc is provided with an orifice 46 to accommodate mounting on the end of an axle. In addition, the disc is provided with a pattern of five holes 48 in a first bolt circle arranged in manner to match the lugs of one particular wheel for which the disc is designed. To accommodate another type of wheel, four holes 50 are provided in a second bolt circle of different radius. In this manner disc 44 may accommodate different manufacturer's wheel designs. In addition, disc 44 is provided with a large number, twenty-four as shown, of attaching apertures 52. These are positioned equidistant from the center of the disc, around the outer edges thereof, and provide multiple attaching positions for the T-shaped hooks shown in Fig. 3. In this manner numerous chain sections may be attached to the disc at different points. Thus, the disc provides for easy installation and removal of a varying number of chain sections.

In Fig. 5, a cross-sectional view of disc member 44 taken along lines 5—5 of Fig. 4, the attaching apertures 52 and lug holes 48 are shown. In this view the shape of the disc member is shown in detail. The center cylindrical section 54 is provided in the disc member to accommodate the lateral displacement of conventional tire rims. Conical section 56 provides the appropriate positioning of the disc member adjacent the edge of the rim of the tire so that access to apertures 52 may be had without difficulty and so that the tire chains of the present invention will not interfere with normal operation of the wheel.

In Fig. 6, a different chain tread style is shown. In this figure, the T-shaped hook 36 of Fig. 3, including hook 42 for attaching to the disc member, is connected to two chains 58 which are interconnected by jump ring 60. The chains, of course, can be continuous and interconnected with each other and can be formed in a crossing pattern, if desired. The two separate ends of chains 58 are connected to a second T-shaped connector 62 at aperture 64. T-shaped connector 62 is threaded at its elongate end 66 and is provided with an internally threaded cap 68 having a rotatable shaft 70 connected to ring 72 and to intermediate chain section 74. In this manner a fully adjustable chain section is provided. In addition, extension 66 of T-shaped connector 62 may be threaded further along its shaft, and provided with a lock nut or, in the alternative, a locking pin or cotter key arrangement may be provided.

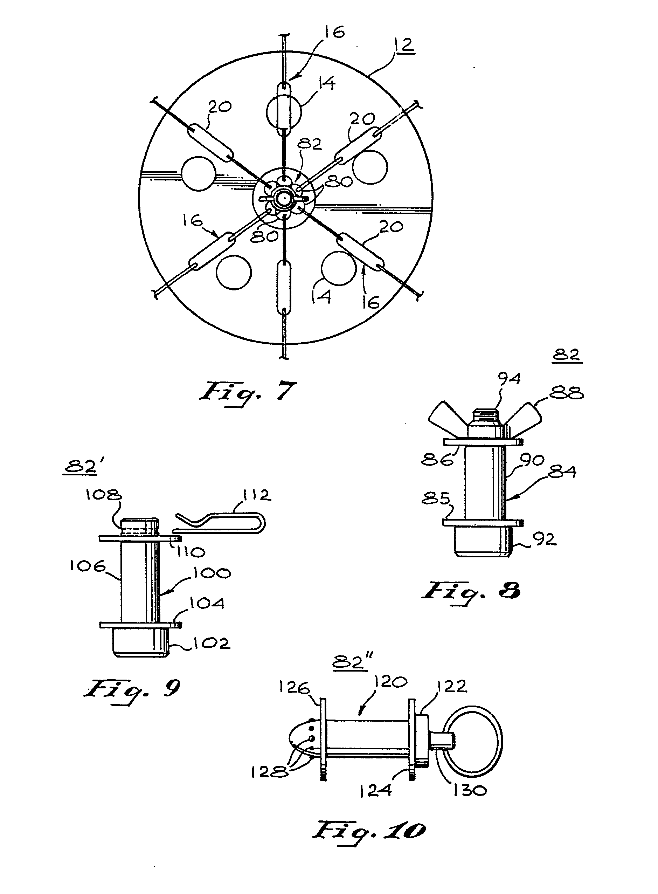

Fig. 7 is a view corresponding to the central portion of the arrangement shown in Fig. 1. In Fig. 7, only the intermediate portions 20 of three distinct chain sections 16 are shown. These intermediate portions 20 cross over, or intersect, each other at central fastening links 80 which, as mounted, are situated on the outside of the wheel in line with the axle. A fastening device 82 is shown which extends through all three of the central fastening links 80 and secures them together. This fastener 82 is releasable so that it can be installed or removed when the chain sections 16 are mounted on the wheel.

One such releasable fastener 82 is shown in Fig. 8 in the form of a bolt 84 having washers 85, 86 and a wing nut 88 threaded on the end 94 of the bolt. The bolt 84 is preferably provided with an enlarged shank portion 90 having a diameter generally conforming to the width of the opening in a central fastening link 80. The bolt head 92, which may be shaped for gripping by a wrench or the like, preferably has the washer 85 fixed in position next to it. The washer 86 is removable with the wing nut 88 from the threaded end 94. As indicated in Fig. 7, the bolt 84 is inserted from the inboard side of the central fastening links 80 through each of the links 80 until the threaded end 94 protrudes. The washer 86 is then placed in position and the wing nut 88 threaded onto the bolt until the central fastening links 80 are clamped together in a relatively rigid configuration, as shown in Fig. 7. This serves to secure each of the chain sections 16 in the position as originally mounted on the wheel, despite the forces developed during operation of the vehicle which might tend to cause the traction sections 18 (Fig. 1) to slip around the tire, by virtue of the fact that such unbalanced forces on one chain section 16 are transferred to the remaining chain sections with the result that the entire chain system becomes tightened in place.

Fig. 9 shows an alternative fastener 82' in the form of a pin 100 having a cap 102 and a washer 104 which is preferably fixed adjacent the cap. The shank 106 of the pin 100 is provided with a transverse hole 108 adjacent the distal end of the pin 100. A second washer 110 is provided for mounting in the position shown, after the pin 100 has been inserted from the inboard side through the central fastening links 80. After such assembly, a spring clip 112 is inserted through the hole 108 to retain the washer 110 in position and to hold the fastener 100 in place until it is desired to remove the chains from the wheel.

Fig. 10 shows still another fastener 82'' in the form of a ball-pin 120 having a cap 122 and washer 124 formed on the proximal end of the pin. Another, removable, washer 126 is provided for positioning on the distal end. The pin 120 is provided with a plurality of balls 128 adjacent the distal end which are mounted in known fashion to protrude slightly from the surface of the pin 120. These balls 128 are held in the position shown by an internal pin member attached to the actuator 130. The balls 128 can be released by axial movement of the actuator 130, relative to the pin 120, at which time the balls 128 are released to move radially inward so that the washer 126 can be installed on, or removed from, the shank of the pin 120. In use, the ball-pin 82'' would probably be inserted from the outboard side through the central fastening links 80, after which the washer 126 would be mounted from the inboard side and the actuator 130 released to the position where the balls 128 are forced outward to engage the washer 126 in the position shown.

## Claims

1. A tire chain assembly for motor vehicles comprising an apertured mounting member (44) to be mounted to encircle the hub inboard of the vehicle wheel, pairs of tread chain segments (18) to extend across the tread of the tire (10), the segments (18) of each pair being attached at one end at spaced points to a coupling member (36) for hooked engagement with the mounting member (44), and means (24) for tightening the segments (18) on the tire, characterised in that the segments (18) of each pair are attached at their other ends to a first end of an intermediate chain (20) which extends diametrically across the face of the wheel and is attached at its second end to the diametrically opposite pair of chain segments, and in that the intermediate chain (20) is provided with a chain tensioning device (22).

2. A tire chain assembly as claimed in claim 1, characterized by each pair of tread chain segments (18) being joined together at their junction with a corresponding end of the intermediate chain (20) and forming a V-shaped configuration for extending across the tire tread.

3. A tire chain assembly as claimed in claim 1 or 2, characterized in that the coupling member (36) is shaped like a tee, the tee having a hook (42) at the base of the leg portion (41) of the tee shaped to loop through a selected one of a plurality of anchoring apertures (52) in the mounting member (44) and a pair of openings (38) are provided at opposite ends of the crossbar portion (39) of the tee for fastening the associated tread chain segments (18) to the coupling member (36).

4. A tire chain assembly as claimed in claim 1, 2 or 3 characterized by a releasable fastener (82) securing the intermediate chains (20) together where they intersect near the centre of the assembly.

5. A tire chain assembly as claimed in claim 4 characterized by each intermediate chain (20) including at least one central fastening link (80) for receiving the releasable fastener (82) therein.

6. A tire assembly as claimed in claim 4 or 5, characterized in that the releasable fastener (82) comprises a bolt (84) having a central shank portion (90), a cap (92) and fixed washer (85) mounted at one end of the shank portion (90), a threaded portion (94) of reduced diameter on the other end of the shank portion (90), and a removable washer (86) and nut (88) for threadably engaging the threaded portion (94).

7. A tire chain assembly as claimed in claim 4 or 5, characterized in that the releasable fastener (82) comprises a pin (100) having a head (102) and washer (104) mounted at one end, the other end having a transverse opening (108) extending therethrough, a removable washer (110) for mounting on said pin (100), a spring clip (112) for threading through said opening (108) to retain the pin (11) and removable washer (110).

8. A tire chain assembly as claimed in claim 4 or 5, characterized in that the removable fastener comprises a ball-pin (120) having a first washer (124), fixed in position near the proximal end thereof, and a second washer (126) for removably mounting on the pin (120) when the pin (120) is threaded through the intermediate chains (20) at their point of intersection.

**Patentansprüche**

1. Schneekettenanordnung für Kraftfahrzeuge, bestehend aus einem mit Öffnungen versehenen Befestigungselement (44), das so anbringbar ist, daß es die Nabe an der Fahrzeugrad-Innenseite umgibt, Paaren von Laufflächenketten-Segmenten (18) zur Erstreckung quer über die Lauffläche des Reifens (10), wobei die Segmente jedes Paars am einen Ende an beabstandeten Stellen mit einem Verbindungselement (36) zum Verhaken mit dem Befestigungselement (44) verbunden sind, und Einrichtungen (24) zum Spannen der Segmente (18) am Reifen, dadurch gekennzeichnet, daß die Segmente (18) jedes Paars an ihren anderen Enden mit einem ersten Ende einer Zwischenkette (20) verbunden sind, die sich diametral über die Stirnfläche des Rades erstreckt und an ihrem zweiten Ende mit dem diametral gegenüberliegenden Paar von Kettensegmenten verbunden ist, und daß die Zwischenkette (20) eine Kettenspannvorrichtung (22) aufweist.

2. Schneekettenanordnung nach Anspruch 1, dadurch gekennzeichnet, daß jedes Paar von Kettensegmenten (18) an ihrem Verbindungspunkt mit einem entsprechenden Ende der Zwischenkette (20) verbunden ist und eine V-förmige Anordnung zur Erstreckung quer über die Reifenlauffläche bildet.

3. Schneekettenanordnung nach Anspruch 1 oder 2, dadurch gekennzeichnet, daß das Verbindungselement (36) T-förmig ausgebildet ist, wobei das T einen Haken (42) am unteren Ende des Schenkelteils (41) des T hat, der so geformt ist, daß er durch eine ausgewählte Öffnung mehrerer Verankerungsöffnungen (52) im Befestigungselement (44) geführt werden kann, und daß zwei Öffnungen (38) an entgegengesetzten Enden des Querstücks (39) des T zur Befestigung der zugehörigen Laufflächenketten-Segmente (18) am Verbindungselement (36) vorgesehen sind.

4. Schneekettenanordnung nach Anspruch 1, 2 oder 3, gekennzeichnet, durch ein lösbares Befestigungselement (82) zur Verbindung der Zwischenketten (20) an der Stelle, an der sie sich nahe der Mitte der Anordnung schneiden.

5. Schneekettenanordnung nach Anspruch 4, dadurch gekennzeichnet, daß jede Zwischenkette (20) wenigstens ein zentrales Verbindungselement (80) zur Aufnahme des lösbaren Befestigungselementes (82) aufweist.

6. Schneekettenanordnung nach Anspruch 4 oder 5, dadurch gekennzeichnet, daß das lösbare Befestigungselement einen Bolzen (84) mit einem zentralen Schaftabschnitt (90), einer Kappe (92) und einer festen Zwischenscheibe (85), die am einen Ende des Schaftabschnittes (90) befestigt ist, einen Gewindeabschnitt (94) mit geringerem Durchmesser am anderen Ende des Schaftabschnitts (90) und eine abnehmbare Zwischenscheibe (86) und eine Mutter (88), die auf den Gewindeabschnitt (94) aufschraubbar ist, aufweist.

7. Schneekettenanordnung nach Anspruch 4 oder 5, dadurch gekennzeichnet, daß das Lösbare Befestigungselement (82) einen Zapfen (100) mit einem Kopf (102) und einer Zwischenscheibe (104), die am einen Ende befestigt ist, aufweist, wobei das andere Ende eine durchgehende Querbohrung (108), eine abnehmbare Zwischenscheibe (110) zur Befestigung an dem Zapfen (104) und einen durch die Bohrung (108) einsetzbaren Federbügel (112) aufweist, um den Zapfen (100) und die abnehmbare Zwischenscheibe (110) zu halten.

8. Schneekettenanordnung nach Anspruch 4 oder 5, dadurch gekennzeichnet, daß das lösbare Befestigungselement einen Kugelzapfen (120) mit einer ersten Zwischenscheibe (124) aufweist, die nahe desse proximalem Ende befestigt ist, sowie eine zweite Zwischenscheibe (126) zur lösbaren Befestigung am Zapfen (120), wenn der Zapfen (120) durch die Zwischenketten (20) an deren Schnittpunkt geführt ist.

**Revendications**

1. Ensemble à chaînes pour pneumatique destiné à des véhicules à moteur, comprenant un organe (44) de montage ayant des ouvertures, destiné à être monté afin qu'il entoure le moyeu à l'intérieur de la roue du véhicule, des paires de tronçons (18) de chaîne destinés à être disposés sur la bande de roulement du pneumatique (10), les tronçons (18) de chaque paire étant fixés, à une première extrémité, en des points espacés à une organe (36) d'accouplement permettant une coopération par accrochage avec l'organe de montage (44), et un dispositif (24) de serrage des tronçons (18) sur le pneumatique, caractérisé en ce que les tronçons (18) de chaque paire sont fixés, à leurs autres extrémités, à une première extrémité d'une chaîne intermédiaire (20) disposée diamétralement à la face de la roue et fixée à sa seconde extrémité à la paire diamétralement opposée de tronçons de chaîne, et en ce que la chaîne intermédiaire (20) est munie d'un tendeur (22).

2. Ensemble à chaînes pour pneumatique selon la revendication 1, caractérisé en ce que chaque paire de tronçons (18) de chaîne pour bande de roulement est raccordée, à la connexion des tronçons, à une extrémité correspondante de la chaîne intermédiaire (20) et forme une configuration en V afin que les chaînes soient disposées sur la bande de roulement.

3. Ensemble à chaînes pour pneumatique selon l'une des revendications 1 et 2, caractérisé en ce que l'organe (36) d'accouplement a une configuration en T, le T ayant un crochet (42) placé à la base de la branche (41) du T, ce crochet étant destiné à passer dans une ouverture choisie parmi plusieurs ouvertures (52) de fixation formées dans l'organe de montage (44), et deux ouvertures (38) sont disposées aux extrémités opposées de la traverse (39) du T afin qu'elles permettent la fixation des tronçons associés (18) de chaîne de bande de roulement à l'organe d'accouplement (36).

4. Ensemble à chaînes pour pneumatique selon l'une quelconque des revendications 1, 2 et 3, caractérisé par un organe (82) de fixation temporaire maintenant les chaînes intermédiaires (20) ensemble à l'endroit où elles se recoupent près du centre de l'ensemble.

5. Ensemble à chaînes pour pneumatique selon la revendication 4, caractérisé en ce que chaque chaîne intermédiaire (20) comporte au moins un maillon central (80) de fixation destiné à loger l'organe de fixation temporaire (82).

6. Ensemble pour pneumatique selon l'une des revendications 4 et 5, caractérisé en ce que l'organe (82) de fixation temporaire comporte un boulon (84) ayant une partie centrale de tige (90), un capuchon (92) et une rondelle fixe (85) montée à une première extrémité de la tige (90), une partie filetée (94) de diamètre réduit à l'autre extrémité de la tige (90), et une rondelle amovible (86) et un boulon (88) destiné à coopérer par vissage avec la partie filetée (94).

7. Ensemble à chaînes pour pneumatique selon l'une des revendications 4 et 5, caractérisé en ce que l'organe de fixation temporaire (82) comporte une tige (100) ayant une tête (102) et une rondelle (104) montées à une première extrémité, l'autre extrémité ayant une ouverture transversale (108) qui la traverse, une rondelle amovible (110) destinée à être montée sur la tige (100), et une agrafe élastique (112) destinée à passer dans l'ouverture (108) afin qu'elle retienne la tige (100) et la rondelle amovible (110).

8. Ensemble à chaînes pour pneumatique selon l'une des revendications 4 et 5, caractérisé en ce que l'organe de fixation temporaire comporte une tige (120) à billes ayant une première rondelle (124) fixée près de l'extrémité interne, et une seconde rondelle (126) destinée à être montée de façon temporaire sur la tige (120) lorsque la tige (120) est enfilée dans les chaînes intermédiaires (20) à leur point d'intersection.

0 090 110

Fig. 1

Fig. 2

Fig. 3

Fig. 4

Fig. 5

Fig. 6

1

Fig. 7

Fig. 8

Fig. 9

Fig. 10